# EUROPEAN PATENT APPLICATION

(11) **EP 4 807 676 A1**
(43) Date of publication of application: **16.09.2026**
(21) Application number: 25179830.2
(22) Date of filing: 30.05.2025
(51) Int. Cl.: G06T 7/33

(54) **POINT MATCHING FROM SOURCE IMAGING DATASET TO TARGET IMAGING DATASET USING CONSISTENCY**

(30) Priority: 11.03.2025 US 202563769833 P
(71) Applicant: Siemens Healthineers AG, 91301 Forchheim (DE)
(72) Inventor: YEREBAKAN, Halid, Carmel, 46033 (US); HERMOSILLO VALADEZ, Gerardo, West Chester, 19382 (US)
(74) Representative: Kraus & Lederer PartGmbB

(57) **Abstract**

Techniques of determining a spatial correspondence between a source imaging dataset - e.g., a Computed Tomography medical imaging dataset or a Magnetic Resonance Tomography medical imaging dataset - and a target imaging dataset using a point-matching algorithm are disclosed. In addition to similarity values between respective descriptors considered by the point-matching algorithm, a consistency of an output of the point-matching algorithm is additionally taken into account. This consistency is determined by forward-backward execution of the point-matching algorithm and then assessing a respective spatial distance or offset.

## Description

Independent of the grammatical term usage, individuals with male, female or other gender identities are included within the term.

### TECHNICAL FIELD

Various examples of the disclosure generally relate to establishing a spatial correspondence between a source imaging dataset and a target imaging dataset using a point-matching algorithm. Various examples specifically relate to establishing the spatial correspondence taking into account consistency values for pairs of source points and forward-match target points.

### BACKGROUND

With the advancement of digitalization in healthcare, medical imaging datasets are accumulating at an accelerated pace. Often, medical imaging datasets of a particular region of interest (ROI) of a patient are acquired at multiple points in time, to (radiological follow-up studies). Then, when assessing the medical imaging datasets, it is often required to execute comparisons between multiple medical imaging datasets, e.g., acquired at multiple points in time. For instance, a medical practitioner may find a certain point of interest (POI) within the ROI imaged by both the source and target imaging datasets in a source imaging dataset and may then want to inspect that POI also in a target imaging dataset. To enable fast navigation across multiple medical imaging datasets, spatial correspondence may be established between pairs of medical imaging datasets.

As a general rule, there are multiple options available for establishing spatial correspondence between pairs of medical images.

One option for establishing spatial correspondence is executing a registration. Registration involves determining a complete transformation between a source imaging dataset and a target imaging dataset that aligns each image point in a source imaging dataset with a corresponding image point in a target imaging dataset, allowing for accurate comparisons and analyses. Registration techniques may include rigid, affine, or deformable transformations, depending on the degree of flexibility required to account for anatomical or pathological changes between the datasets. Landmark-based registration rely on corresponding anatomical landmarks, while intensity-based registration utilizes similarity metrics such as mutual information or cross-correlation. The registration may also incorporate optimization techniques to refine the transformation parameters and improve accuracy. Once aligned, interpolation and resampling methods can be applied to ensure proper pixel- or voxel-wise correspondence between the registered imaging datasets. Techniques such as image pyramids or iterative closest point algorithms may be employed to enhance computational efficiency and robustness. Regularization methods, such as inverse consistency, can be used to ensure that transformations are physically plausible and consistent in both directions. The accuracy of the registration is often assessed through validation metrics, including target registration error, which quantifies the alignment precision between corresponding landmarks or regions. However, despite efforts to reduce the computational complexity, full registration of a source medical imaging dataset with a target medical imaging dataset is computationally expensive and, accordingly, often time-consuming. Further, landmark-based registration - while computationally less expensive - may suffer from reduced accuracy.

Yet another approach for establishing spatial correspondence is to employ a point-matching algorithm (PMA). PMAs do not determine a transformation between a source imaging dataset and a target imaging dataset. Rather, for a given query point in the source imaging dataset, a corresponding center point is determined in the target imaging dataset. The PMA employs descriptors. A descriptor is a representation describing the local appearance and characteristic of the respective imaging dataset at a corresponding point. For instance, descriptors may employ a sparse sampling grid to select a limited number of salient points within the respective imaging dataset located relative to the associated point of the descriptor.

A particular technique is disclosed in Bai, X. et al. Uae: Universal anatomical embedding on multi-modality medical images. arXiv preprint arXiv:2311.15111 (2023). This technique employs an iterative forward-backward-matching technique based on descriptors that employ embedded feature vectors. It has been found that these techniques are relatively accurate, however, still require significant time for execution. Thus, fast navigation through large medical imaging datasets is not possible using conventional computer hardware.

### SUMMARY

Accordingly, a need exists for advanced techniques of establishing spatial correspondence between a source imaging dataset and a target imaging dataset. Specifically, a need exists for techniques that enable computationally efficient yet accurate establishing of the spatial correspondence.

A method of establishing a spatial correspondence is disclosed. The spatial correspondence is between a source imaging dataset and a target imaging dataset. The spatial correspondence is established using a point-matching algorithm. The source imaging dataset in the target imaging dataset both depict a region of interest of an anatomy of a patient. The point-matching algorithm determines similarity values between descriptors of source points in the source imaging dataset and descriptors of target points in the target imaging dataset. The method includes obtaining a query point in the source imaging dataset. The method further includes determining, for each of multiple source points position relative to the query point, a respective forward-match target point. This is done using first executions of the point-matching algorithm. The method also includes determining, for each of the forward-match target points, a respective backward-match source point using second executions of the point-matching algorithm. The method further includes determining spatial distances between associated pairs of the multiple source points and the backward-match source points. The method also includes establishing the spatial correspondence between the source imaging dataset and target imaging dataset at the query point based on the similarity values of the first executions of the point-matching algorithm and further based on the spatial distances.

A computing device includes at least one processing unit as well as at least one memory. The at least one processing unit is configured to load program code from the at least one memory. The at least one processing unit is also configured to execute the program code. Such execution of the program code causes the at least one processing unit to obtain a query point in a source imaging dataset. The execution of the program code also causes the at least one processing unit to determine, for each of multiple source points positioned relative to the query point, a respective forward-match target point using first executions of a point-matching algorithm. Here, the source imaging dataset and the target imaging dataset both depict a region of interest of an anatomy of a patient, e.g., using one or more imaging modalities. The point-matching algorithm determines similarity values between descriptors of source points in the source imaging dataset as well as descriptors of target points in the target imaging dataset. The execution of the program code also causes the at least one processing unit to determine, for each of the forward-match target points, a respective backward-match source point using second executions of the point-matching algorithm and to determine spatial distances between associated pairs of the multiple source points and the backward-match source points. Execution of the program code further causes the at least one processing unit to establish the spatial correspondence between the source imaging dataset and the target imaging dataset of the query point based on the similarity values of the first executions of the point-matching algorithm as well as further based on the spatial distances.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

FIG. 1 schematically illustrates a system including a computing device and multiple sources of medical imaging datasets according to various examples.
FIG. 2 schematically illustrates a processing pipeline for processing multiple medical imaging data sets to establish a spatial correspondence amongst the multiple medical imaging datasets according to various examples.
FIG. 3 is a flowchart of a method according to various examples.
FIG. 4 schematically illustrates an example arrangement of source points in a source medical imaging dataset arranged relatively to a query point according to various examples.
FIG. 5 is a flowchart of a method according to various examples, the method of FIG. 5 implementing a PMA according to various examples.
FIG. 6 schematically illustrates a sparse sampling grid defining salient points for a descriptor according to various examples.
FIG. 7 schematically illustrates a descriptor according to various examples.
FIG. 8 schematically illustrates a forward- backward match to calculate a consistency value according to various examples.
FIG. 9 schematically illustrates a forward-backward match to calculate a consistency value according to various examples.
FIG. 10 is a pseudocode of an algorithm to establish spatial correspondence employing a point-matching algorithm according to various examples.
FIG. 11 is a performance benchmark of an algorithm according to various examples.
FIG. 12 is a performance benchmark of an algorithm according to various examples.

### DETAILED DESCRIPTION

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processing unit (GPU), a tensor processing unit (TPU), integrated circuits such as application-specific integrated circuits or field-programmable gate array (FPGA) circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques of establishing spatial correspondence between a source imaging dataset and a target imaging dataset employing a PMA are disclosed. The source imaging dataset and the target imaging dataset may both depict a specific ROI of the patient. The source imaging dataset and the target imaging dataset may be part of a radiological follow-up study associated with a patient.

The PMA is a descriptor search method designed to efficiently identify the corresponding points between pairs of imaging datasets. According to examples, descriptors may be determined through simple memory lookups of pixel-element values, e.g., pixel values for two-dimensional (2-D) imaging datasets or voxel values for three-dimensional (3-D) imaging datasets.

In other words, the descriptors may be implemented as vectors of pixel-element values of sparse sampling grids that are arranged relative to the respective point in the associated imaging dataset. Then, vector distances between the vectors of the respective descriptors can be calculated as similarity values.

The sparse sampling grids enable rapid scaling of descriptors to different resolutions. Multi-resolution strategies on both search and descriptor definition allow to effectively capture fine anatomical details along with broader global context. According to examples, such sparse sampling grids may have a grid size or multiple grid sizes defined in absolute distances, e.g., millimeter displacements. Instead of resampling medical imaging datasets, the sampler function adapts to the individual voxel spacings, avoiding additional memory and computation. Such sparse sampling grids can be scaled to perform matching at both fine and coarse resolutions. Offsets defined in millimeters can be multiplied by a scaling factor to enable zoom-in functionality.

As will be appreciated, the PMA that can determine similarity values between a reference descriptor defined for a point in a first imaging dataset (which may be, for a forward execution, the source imaging dataset for which the query point is defined; or, for a backward execution the target imaging dataset for which the center point is to be determined) and multiple candidate descriptors defined for different candidate points in the second imaging dataset (i.e., for the forward execution, the target imaging dataset; or, for the backward execution, the source imaging dataset). The PMA can return that particular candidate point as matching to the point in the first imaging dataset that is the similarity value indicative of the best similarity between the respective pairs of descriptors.

According to various examples, such similarity-based point matching is extended to, additionally, take into account spatial distances between multiple source points determined based on round-trip point matching. In other words, in a first execution of the PMA, a forward-match target point in the target imaging dataset is determined for an initial source point in the source imaging dataset. Then, in a second execution of the PMA, a backward-match source point in the source imaging dataset is determined, showing a highest similarity value with the forward-match target point. Then, a spatial distance between the initial source point and the backward-match source point in the source imaging dataset can be determined. The larger (smaller) that spatial distance, the lower (higher) a consistency value, i.e., the trust level associated with the pair of initial source point and forward-match target point. Linear and non-linear relationships between the spatial distance and the consistency value may be considered.

Thus, as will be appreciated from the above, multiple measures for establishing the spatial correspondence are available: firstly, the similarity values output by the PMA based on comparisons amongst descriptors; secondly, the consistency values determined by round-trip point matching.

Overall, it has been found that by, additionally, considering the consistency values the reliability and robustness of the establishing of the spatial correspondence can be increased. In particular, it has been found that robust results can be obtained even when employing unencoded descriptors, i.e., descriptors that are vectors holding intensity values at certain pixel elements of the imaging datasets, without further embedding using machine-learned (ML) encoders. Thus, the respective descriptors can be determined using simple memory lookups without additional computations, thereby strongly accelerating the execution of the algorithm for establishing the spatial correspondence if compared to reference scenarios that need to employ ML encoders to determine the descriptors.

According to the disclosed techniques, spatial correspondence may be established for various kinds and types of imaging datasets, specifically medical imaging datasets. For instance, the source and target imaging datasets may be 2D imaging datasets or 3D imaging datasets. For instance, pixel-based or voxel-based imaging datasets may be considered. Medical imaging datasets may be acquired using various modalities such as Computed Tomography or Magnetic Resonance Tomography or ultrasound, to give just a few examples. The disclosed techniques are flexible for various kinds and types of medical imaging datasets, because an additional layer of robustness in the establishment of the spatial correspondence is established through use of the consistency values, as explained above. According to examples, a source medical imaging dataset and a target medical imaging dataset may be part of a longitudinal study. A longitudinal study may refer to a research methodology where observations of the same subject or group of subjects are conducted over a period of time, with data collected at multiple time points. In the context of medical imaging, a longitudinal study may involve acquiring medical imaging datasets of a patient at different points in time, such as before and after treatment, or over the course of disease progression. These datasets may capture changes in anatomy, physiology, or pathology, enabling clinicians and researchers to analyze temporal variations and track outcomes. In the context of the techniques disclosed herein, the source and target imaging datasets may be part of a longitudinal study, with the source dataset acquired at an earlier time point and the target dataset acquired at a later time point. The establishment of spatial correspondence between these datasets is particularly important in such scenarios, as it allows for accurate comparison and analysis of changes over time. For example, spatial correspondence may enable the quantification of tumor growth or the assessment of treatment response by aligning POIs in imaging datasets acquired at different stages of a patient's care. According to examples, the source medical imaging dataset and the target medical imaging dataset may be associated with different imaging modalities. Thus, spatial correspondence can be implemented in a multi-modal imaging study. For instance, the source medical imaging dataset may be a Magnetic Resonance Tomography imaging dataset while the target medical imaging dataset may be a Computed Tomography medical imaging dataset, to give just one example of such multi-modal imaging study. A multi-modal imaging study may refer to a medical imaging examination that employs multiple imaging modalities to acquire complementary information about a patient's anatomy, physiology, or pathology. For instance, such studies may combine imaging datasets acquired using different modalities like Computed Tomography (CT), Magnetic Resonance Imaging (MRI), Positron Emission Tomography (PET), or ultrasound. Each modality may provide distinct types of information, such as anatomical structure, tissue composition, functional activity, or molecular characteristics. The integration of these diverse datasets can enhance diagnostic accuracy and provide a more comprehensive understanding of the ROI. In the context of establishing spatial correspondence between imaging datasets, multi-modal studies present unique challenges due to differences in image acquisition principles, voxel intensities, and spatial resolutions across modalities. However, techniques like point-matching algorithms incorporating consistency values can be particularly advantageous in such scenarios, as they may enable robust alignment of features even when the underlying image characteristics vary significantly between modalities.

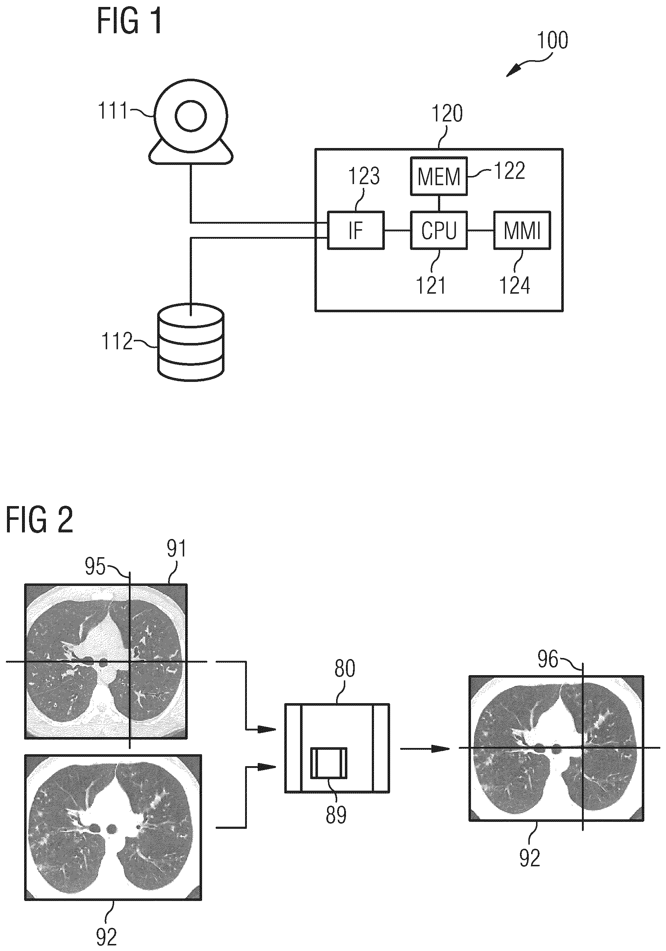

FIG. 1 schematically illustrates a system 100 according to various examples. The system 100 includes a computing device 120. The computing device 120 includes a processing unit 121. The processing unit may be implemented by one or more of the following: a central processing unit, a graphics processing unit, a tensor processing unit, an application-specific integrated circuit, a field-programmable gated array. The processing unit 121 is coupled with a memory 122. The processing unit may load program code from the memory 122 and execute the program code. The processing unit 121, upon loading and executing the program code, can perform techniques as disclosed herein, e.g., executing an algorithm for establishing spatial correspondence, executing a PMA, embedding vectors, calculating vector distances, determining similarity values between descriptors, determining confidence values for pairs of descriptors, etc. In particular, the processing unit 121 may obtain imaging datasets by loading the imaging datasets from the memory 122. Alternatively or additionally, the processing unit 121 may obtain imaging datasets from respective imaging devices via a computing interface 123. In FIG. 1, an example medical imaging device 111 is illustrated. Alternatively or additionally, the processing unit 121 may obtain the imaging datasets from an archive 112, e.g., a cloud archive. The archive 112 may implement a picture-archive system. The processing unit 121 may then output information indicative of the spatial correspondence via a human-machine interface 124. For instance, the human-machine interface 124 may include a keyboard, a mouse, one or more displays, etc. For instance, the processing unit 121 may control the human-machine interface 124 to present images based on the imaging datasets to a user. The processing unit 121 may obtain user input via the human-machine interface 124. For instance, such user input may pertain to a query point in a source imaging dataset. The query point may specify a POI. The processing unit 121 may then control the human-machine interface 124 to output an indication of a center point in a target imaging dataset, the center point being associated with the query point.

FIG. 2 schematically illustrates an algorithm 80 for determining a spatial correspondence between a source imaging dataset 91 and a target imaging dataset 92. This algorithm 80 will be referred to as spatial correspondence algorithm (SCA) hereinafter.

In the scenario of FIG. 2, the source imaging dataset 91 and the target imaging dataset 92 are implemented as slice images obtained from a Computed Tomography scan. Illustrated is a query point 95 specifying a specific POI of the anatomy in the source imaging dataset 91.

The source imaging dataset 91, the target imaging dataset 92 as well as the query point 95 for input to the SCA 80 and the SCA 80 outputs a center point 96 locating the POI in the target image 92.

As illustrated in FIG. 2, the SCA 80 is based on/employs a PMA 89. Any given execution of the SCA 80 may include multiple executions of the PMA 89 or specifically multiple sets of executions of the PMA 89. For instance, execution of the SCA 80 may include a first set of forward executions of the PMA 89, i.e., from the source imaging dataset 91 to the target imaging dataset 92. Additionally, execution of the SCA 80 may include a second set of backward executions of the PMA 89, i.e., from the target imaging dataset 92 to the source imaging dataset 91.

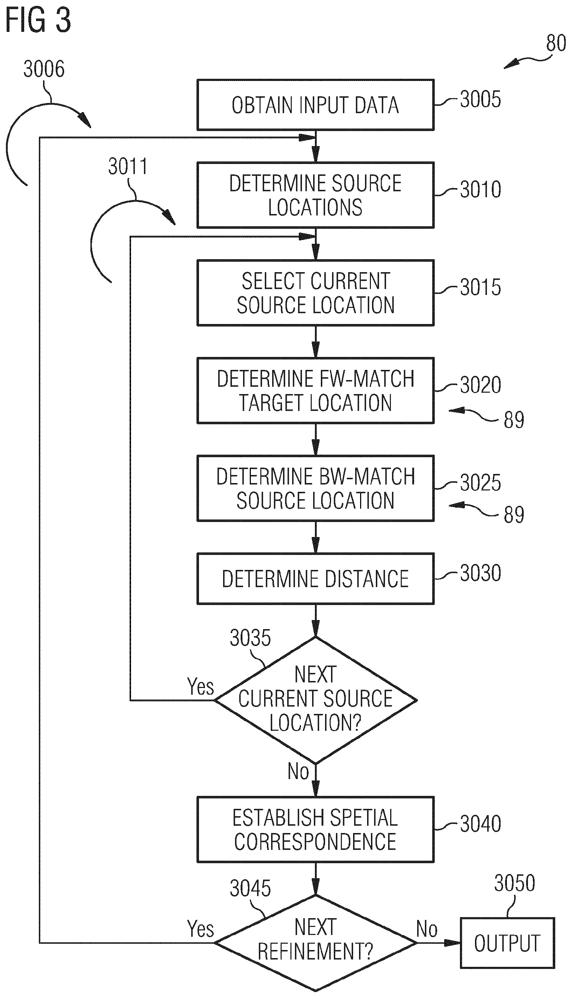

Details with respect to the SCA 80 are next explained in connection with FIG. 3.

FIG. 3 is a flowchart of a method according to various examples. The method of FIG. 3 is computer-implemented. The method of FIG. 3 may be executed by one or processing units. For instance, the method of FIG. 3 may be executed by the computing device 120 previously discussed in connection with FIG. 1. For instance, the method of FIG. 3 may be executed by the processing unit 121, upon loading program code from the memory 122 and upon executing the program code.

The method of FIG. 3 specifically pertains to establishing spatial correspondence between a source imaging dataset in the target imaging dataset. The method of FIG. 3 may implement the SCA 80

The method of FIG. 3 starts at box 3005. At box 3005, input data is obtained. The input data includes a source imaging dataset, a target imaging dataset, and a query point (cf. FIG. 2: source imaging dataset 91, target imaging dataset 92, and query point 95).

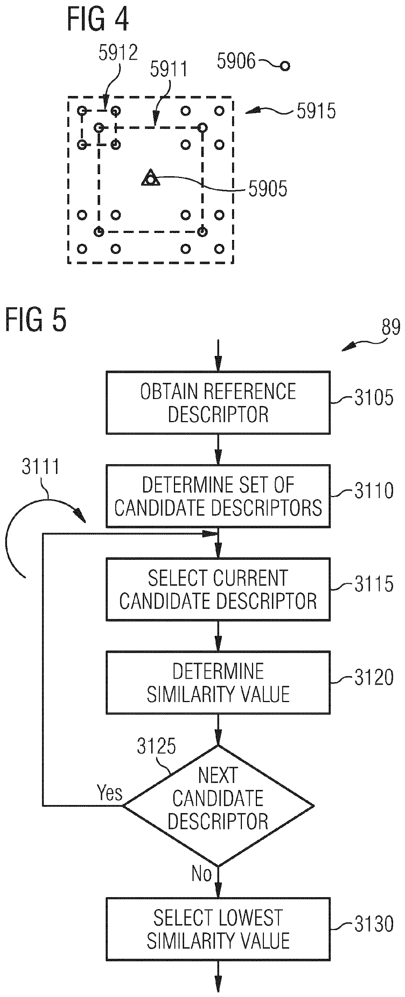

Then, at a first iteration 3006 of box 3010, multiple source points are determined relative to the query point. Each of these multiple source points is position relative to the query point. For instance, the multiple source points determined at box 3010 may located in a certain neighborhood of the query point. The size of that neighborhood may depend on the particular iteration 3006 of box 3010. For instance, a same number of source points may be used for each iteration 3006 and this number of source points may be spread out over increasingly smaller neighborhoods. In other words, an area across which the multiple source points of each iteration 3006 of box 3010 are spread out may decrease from iteration 3006 to iteration 3006. Further, this means that the average distance between the nearest-neighbor source points decreases from iteration 3006 to iteration 3006. This corresponds to a first layer of a coarse-to-fine iterative approach of the SCA 80. The source points determined at each iteration 3006 of box 3010 may be arranged on one or more respective grids. For instance, multiple stacked grids using multiple resolutions could be employed. The grids used in different iterations 3006 of box 3010 may have different resolutions. For instance, earlier (later) iterations 3006 of box 3010 may employ one or more grids having smaller (higher) resolution. For instance, FIG. 4 illustrates a certain query point 5905 (marked by the triangle in FIG. 4) along with multiple source points 5906 arranged on two grids 5911 and 5912 relative to the source point 5906, thereby sampling a certain neighborhood 5915. The grids 5911, 5912 are arranged hierarchically, i.e., an instance of the grid 5912 is located at each grid position of the grid 5911. For subsequent iterations 3006, a scaling factor reducing the grid sizes of each grid 5911, 5912 may be applied. Note that in principle this first layer over the coarse-to-fine iterative approach is optional. In some scenarios, the same source points may be re-used for each iteration 3006 of box 3010, i.e., the same grid(s) may be relied upon.

Now referring again to FIG. 3: upon determining, at the current iteration 3006 of box 3010, a set of source points, at box 3015, a current source point is selected from amongst this set of source points. Then, for this source point, in a respective execution of the PMA, a respective forward-match target point is determined, box 3020. At box 3025, using another execution of the PMA, a backward-match source point is determined for the forward-match target point of the current iteration 3011 of box 3020. Note that the forward-backward executions of the PMA are not reciprocal. Thus, there may be a non-zero spatial distance between the backward-match source point determined at box 3025 and the current source point of box 3015. The spatial distance is determined at box 3030. The spatial distance determined at box 3030 is a measure of the consistency between the current source point of box 3015 in the forward-match target point of box 3020. For instance, the larger (smaller) the spatial distance, the smaller (larger) the consistency value, wherein smaller (larger) consistency values indicate less (more) consistent results.

At box 3035, it is determined whether there is a further source point to be processed in the current set of the current iteration 3006 of box 3010. In the affirmative, a further iteration 3011 of box 3015 is executed, selecting a further current source point. Alternatively, if there is no further source point to be processed, the method commences at box 3040.

At box 3040, spatial correspondence is established between the source imaging dataset and the target imaging dataset. This is based on the spatial distances (or specifically consistency values) determined at each iteration 3011 of box 3030 and it is further based on the similarity values between the source points determined at box 3010 and the forward-match target points determined that each iteration 3011 of box 3020. There are, in principle, many methods for such combined consideration of similarity values and spatial distances when determining the spatial correspondence.

For instance, a combined consideration of the lowest similarity values and the highest consistency values can be used to pick a particular pair of source point and forward-match target point. If this pair is found, then the distance of that source point to the initial query point obtained at box 3005 may be determined and that target point may be offset by this spatial distance. Then, the spatial correspondence may be defined by the query point and the target point upon offsetting the same. This target point can be used as center point locating the POI.

Instead of taking only a single best match between source points and forward-match target points, a ranking may be determined based on the similarity values and the spatial distances or specifically confidence values determined based on the spatial distances. Then, two or more of the forward-match target points may be selected in accordance with the ranking. For instance, the n best matching source and forward-match target points may be selected, with n≥2. Then, a spatial average of these selected and offset-compensated forward-match target points may be calculated as the best guess for the center point in the target image, i.e., as spatial correspondence.

At box 3045, it may then be judged whether a further iteration 3006 may be executed. In the affirmative, a further execution of box 3010 is performed. Alternatively, the final result of the spatial correspondence is output to a user at box 3050. At box 3050, a use case may be implemented.

Note that in later iterations 3006 of box 3040, the results of all preceding iterations 3006 may or may not be taken into account. For example, in a later iteration 3006 of box 3040, the previous estimated spatial correspondence may be refined, e.g., by performing a weighted average with a preceding estimated spatial correspondence. Alternatively, the particular pair of source point and forward-match target point across all iterations 3006 may be selected that has a best combination of similarity value and consistency value.

FIG. 5 illustrates an implementation of the PMA 89. For instance, the method of FIG. 5 may be executed at each of box 3020 and box 3025.

At box 3105, a reference descriptor in a first image is obtained. For instance, the reference descriptor for box 3020 is associated with a source point in the source imaging dataset; while the reference descriptor for box 3025 is associated with a forward-match target point in the target imaging dataset.

Then, a set of candidate descriptors in the respective other imaging dataset is determined. This set of candidate descriptors may be determined in a respective search area. Such search area may located at and surrounding the current best guess for the center location matching the query point. Thus, the search area of the PMA 89 executed in a later iteration 3006 may be based on the previous estimate of the spatial correspondence available from an earlier iteration 3006.

The search area may be larger for executions of the PMA 89 in earlier iterations 3006 than in later iterations 3006 (cf. FIG. 3). In other words, prior knowledge regarding the approximate spatial correspondence may be employed in order to restrict the search area to smaller regions. This implements a second layer of a coarse-to-fine iterative approach.

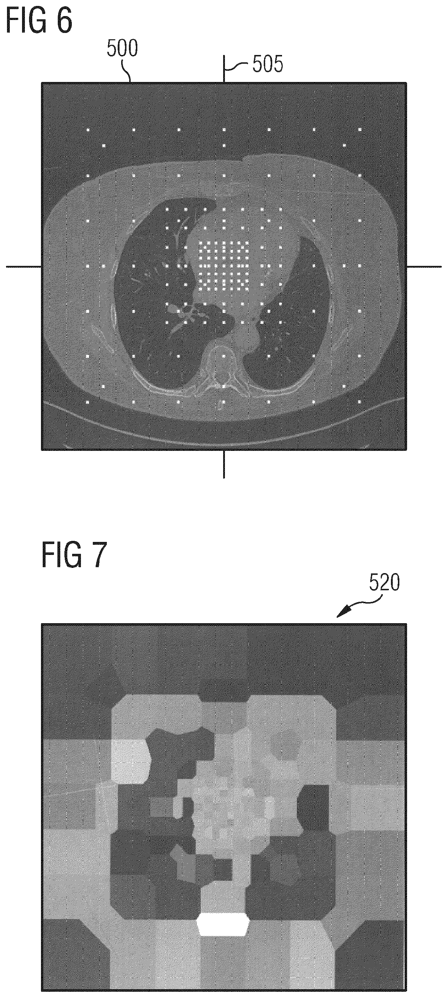

According to examples, the descriptors at box 3105 and box 3110 can be determined using memory lookups of intensity values at certain salient points of a corresponding sparse sampling grid. Thus, the intensity values of pixels or voxels (pixel elements) of the imaging dataset can be arranged in a corresponding vector. For instance, FIG. 6 schematically illustrates such a sparse sampling grid for a certain point 505 in a medical imaging dataset 500. The dots in FIG. 6 illustrate the various salient points for which the corresponding intensity value are collected. While FIG. 6 illustrates a 2D sampling grid, as a general rule, one or more 2D or 3D sampling grids may be employed. FIG. 7 then illustrates the corresponding descriptor, i.e., each grid position is associated with a single intensity value. This intensity value may be picked that the particular salient point or may be averaged across respective grid cells of the associated grid position, depending on the implementation scenario.

In some optional scenarios, a latent embedding may be determined by processing such vector holding intensity values in one or more machine-learned encoder branches. This, however, is optional and requires additional computational resources, thereby increasing the processing latency of the SCA 80. In various examples of the disclosure, terms such as "latent embedding" may refer to a compressed or transformed representation of data. For instance, in the context of descriptors used in PMA, a latent embedding may refer to an encoded version of a descriptor vector that has been processed through one or more ML encoder branches. Such encoders may employ techniques such as neural networks to transform high-dimensional intensity vectors into lower-dimensional representations while preserving salient features for matching purposes. An ML encoder branch may refer to a component of a machine learning model that processes input data, such as intensity vectors derived from medical imaging datasets, to generate latent embeddings. These branches may include convolutional layers for extracting spatial features, self-attention mechanisms for capturing global contextual relationships, or transformer-based architectures for modeling complex anatomical patterns. In some implementations, multiple encoder branches may be employed, each trained using different loss functions to specialize in capturing distinct aspects of the input data. For example, one branch may focus on local anatomical details while another prioritizes global structural information. The outputs from these branches may then be combined or processed further to produce a unified latent representation. The use of latent embeddings may allow for improved matching accuracy by capturing higher-level anatomical or structural information in the imaging datasets, though this is optional and depends on the specific implementation scenario. However, generating latent embeddings typically requires additional computational resources compared to using raw intensity vectors directly, which may increase processing latency in time-sensitive applications such as fast navigation through medical imaging datasets.

In particular, latent embeddings may enable improved matching accuracy for cross-modality lookups, to establish the spatial correspondence between a source imaging dataset of a first modality and a target imaging dataset of a second modality. For instance, latent embeddings may help to establish the spatial correspondence between a CT imaging data set and a MRT imaging data set. On the other hand, for inter-modality lookups - e.g., to establish spatial correspondence between a source imaging dataset and a target imaging dataset of the same modality - latent embeddings may not be required. Here, the raw intensity vectors may be used directly.

Referring again to FIG. 5: in a current iteration 3111 of box 3115, a current candidate descriptor of the set of candidate descriptors of box 3110 is selected. Then, a similarity value is determined at box 3120 between the reference descriptor of box 3105 and the currently selected candidate descriptor of the current iteration 3111 of box 3115.

The similarity values between descriptors can be generally calculated based on the vector distances. For instance, one approach to computing vector distances is the Euclidean distance, which measures the straight-line distance between two points in a multidimensional space. Another example is the Manhattan distance, which calculates the sum of absolute differences between corresponding elements of the vectors. Additionally, cosine similarity may be used to assess the angular similarity between vectors, often after normalizing them to unit length. In some implementations, other distance metrics such as Hamming distance or Mahalanobis distance may also be employed, depending on the specific requirements and characteristics of the imaging datasets being analyzed. The choice of vector distance metric can influence both the accuracy and computational efficiency of the PMA.

Then, at box 3125 it is judged whether a further candidate descriptor of the set of candidate descriptors of box 3110 is to be processed; in the affirmative, a further current candidate descriptor is selected in a further iteration 3111 of box 3115. Otherwise, at box 3130, the lowest similarity value of all iterations 3111 of box 3120 is selected and the associated candidate descriptor is identified. Thereby, a pair of points is identified as matching.

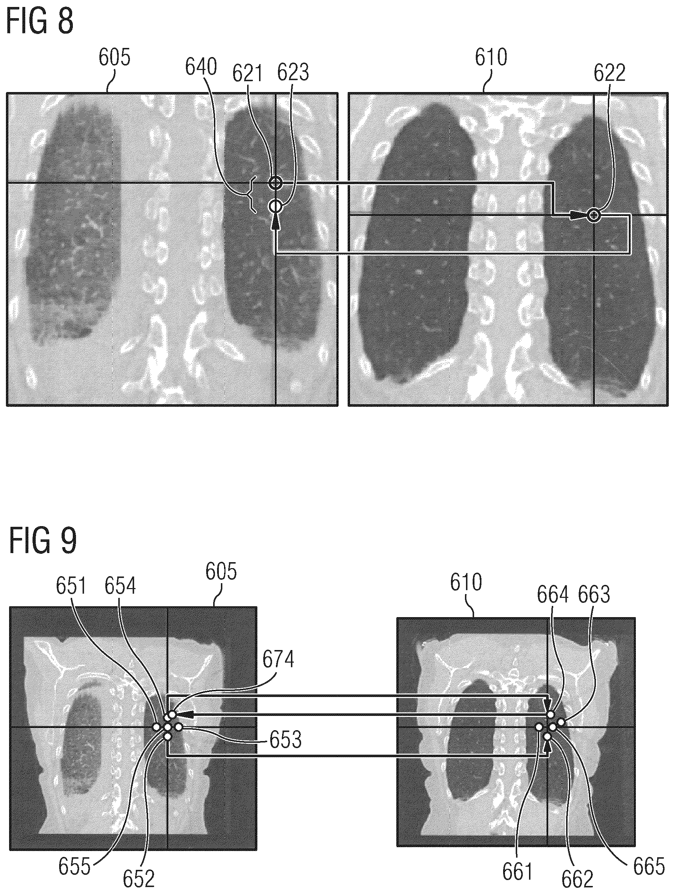

FIG. 8 schematically illustrates aspects with respect to determining a spatial distance 640 between a source point 621 in a source imaging dataset 605 and a backward-match source point 623 in the source imaging dataset 605. First, a forward-match target point 622 matching the source point 621 is determined (cf. FIG. 3: box 3020) employing the PMA 89; then, second, for the forward-match target point 622, the backward-match source point 623 is determined using a further execution of the PMA 89 (cf. FIG. 3: box 3025). Such forward-backward-match is not only executed for a single source point 621, but for multiple source points. This is illustrated in FIG. 9 for the source points 651-655; these source points 651-655 may form a corresponding set determined for the query point (cf. FIG. 3: box 3010). FIG. 9 illustrates that the source point 654 is associated with a backward-match source point 674 having the best consistency value amongst all pairs of source points 651-655 and associated backward-match source points (for sake of simplicity, only the backward-match source point 674 associated with the source point 654 is illustrated in FIG. 9).

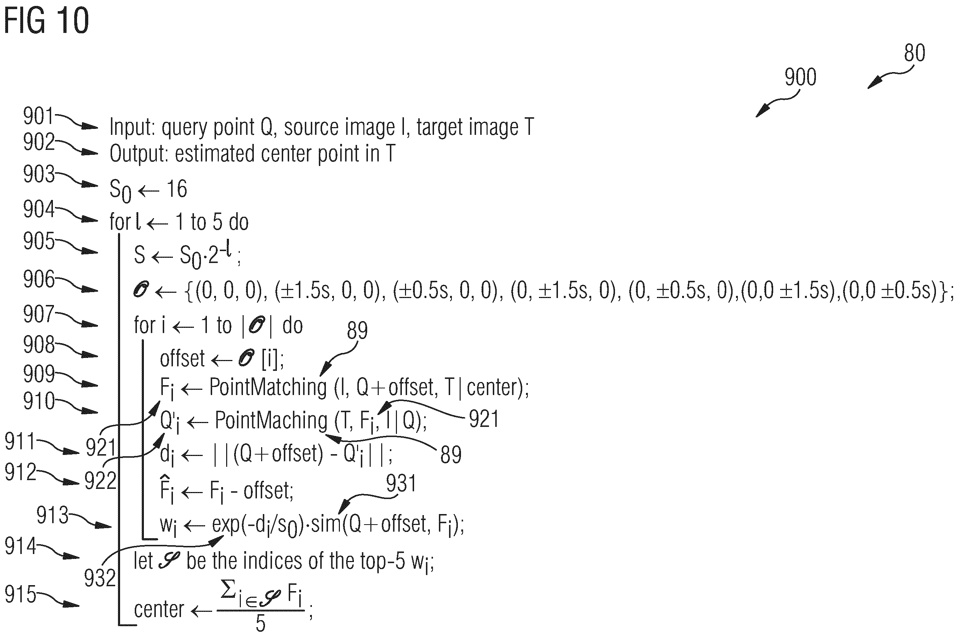

FIG. 10 illustrates pseudo code 900 for the SCA 80. In line 901, a query point is obtained, as well as a source imaging dataset and a target imaging dataset. Thus, line 901 corresponds to box 3005 (cf. FIG. 3). The SCA 80 outputs the estimated center point in the target image, cf. line 902 and box 3050, as well as center point 96 in FIG. 2. In line 903, a parameter value of a resolution parameter is set. This parameter value may be set based on a size of the ROI. Line 904 defines outer-loop iterations, corresponding to the iterations 3006 and FIG. 3. In line 905, the determination of a set of source points is prepared by setting a parameter value regulating a size of the neighborhood around the query location for which source points are determined next (cf. FIG. 4: neighborhood 5915). A set of offset values defining the set of source points relative to the query location is then determined in line 906. Then, line 907 indicates the inner-loop iterations 3011. Next, the current offset value is selected in line 908; and in line 909 the PMA 89 is executed for a respective source point defined by the query point offset by the current offset value. This yields the respectively associated forward-match target point 921. For the forward-match target point 921, next, at line 910, the associated backward-match source point is calculated. Accordingly, line 909 corresponds to box 3020 (cf. FIG. 3) and line 910 corresponds to box 3025 (cf. FIG. 3). At line 911, the spatial distance between the current source point and the associated current backward-match source point is calculated. Accordingly, line 911 corresponds to box 3030 (cf. FIG. 3). At line 912, since the current source point may be offset from the query point (this is the offset parameter value of line 908), the forward-match target point can be compensated for this offset. Then, the compensated forward-match target point is associated with the query point (rather than the offset source point). At line 913, a weight value is calculated for the current pair of source point and forward-match target point. This weight value is determined based on a combination of the similarity value 931 obtained from the PMA 89 executed at line 909; as well as the spatial distance of line 911, normalized between 0 and 1 by the term 932 (consistency value). At line 914, a ranking of the largest weight values is determined and the current center point is then selected at line 915 as an average of the top 5 offsets-compensated forward-match target points across all iterations of line 907. This corresponds to establishing the spatial correspondence at box 3040. The center point is the current best guess for the match to the query point.

Summarizing, an SCA has been disclosed that employs multiple iterations. At each iteration, a grid of candidate target points in the target imaging dataset is considered and one or more best matching target points are selected based on a similarity measure that sums mutual information and cosine similarity. Once the optimal target point is found, the SCA advances to the next iteration, concentrating on a smaller, higher-resolution region. Due to the independent calculation of similarity values, the method achieves a high degree of parallelization.

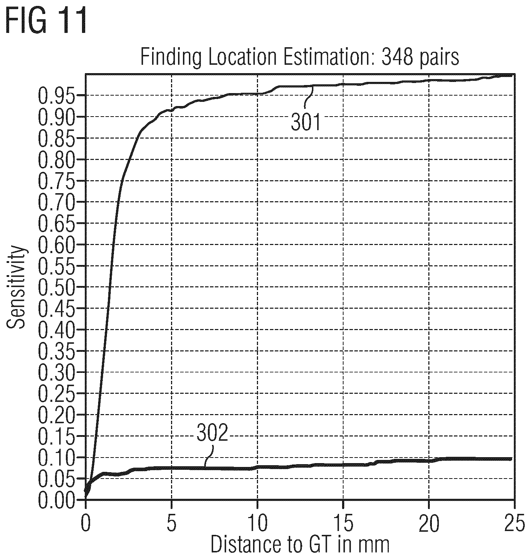

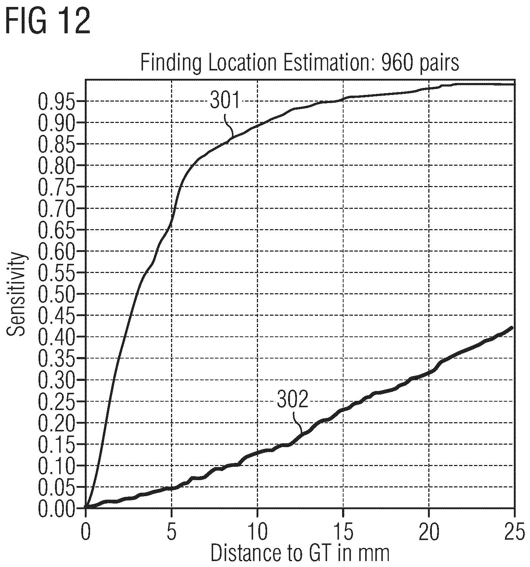

FIG. 11 and FIG. 12 illustrates benchmarks for the SCA 80 (curves 301) as explained above, relative to a conventional PMA such as the PMA 89 not considering consistency (curves 302). The ROC curves 301, 302 obtained changing distance threshold to obtain sensitivity of estimate locations. The sensitivity (vertical axis) is defined by the ratio of points with an error less than the respective distance threshold (horizontal axis: "distance to ground truth", i.e., error). By changing the distance threshold, the sensitivity is changes, as shown by the plots of FIG. 11 and FIG. 12. The sensitivity of curves 301, i.e., SCA 80, is significantly improved vis-á-vis the sensitivity of the curve 302, i.e., prior-art solution. Each query in the illustrated scenarios takes around 1.5s to compute. FIG. 11 is for a lung-lesion longitudinal study. FIG. 12 is for the public "Deep Lesion Tracking" dataset. The data contains more body regions on lesion type matches. The performance improvement is more pronounced in this dataset where the SCA 80 reaches a sensitivity of 99% for distances less than 25mm.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, above, various examples have been disclosed in the context of medical imaging datasets, i.e., imaging datasets that depict an ROI of an anatomy of a patient. However, respective techniques may also be applied to non-medical imaging datasets, e.g., depicting technical or biological specimen.

For further illustration, above, various examples have been disclosed in which a similarity metric between embeddings is determined based on vector distances of vectors holding raw intensity values. Such scenarios have the advantage that the similarity value can be calculated at low computational complexity and further processing of the embeddings beyond simple memory lookups of the intensity values is not required. However, in certain scenarios, more complex embeddings may be helpful. Alternatively or additionally, in certain scenarios, more complex similarity metrics may be helpful. In particular, such a scenario of complex embeddings and/or complex similarity metrics may be applicable to inter-modality lookups to establish spatial correspondence between imaging datasets of different imaging modalities.

## Claims

1. A method of establishing a spatial correspondence between a source imaging dataset (91, 605) and a target imaging dataset (92, 610) using a point-matching algorithm (89), the source imaging dataset (91, 605) and the target imaging dataset (92, 610) both depicting a region of interest of an anatomy of a patient,
the point-matching algorithm (89) determining similarity values between descriptors of source points in the source imaging dataset (91, 605) and descriptors of target points in the target imaging dataset (92, 610),
wherein the method comprises:
- obtaining (3005) a query point (5905) in the source imaging dataset (91, 605),
- determining (3020), for each of multiple source points (621, 651, 652, 653, 654, 655) positioned relative to the query point (5905), a respective forward-match target point (622,661, 662, 663, 664, 665) using first executions of the point-matching algorithm (89),
- determining (3205), for each of the forward-match target points (622, 661, 662, 663, 664, 665), a respective backward-match source point (623) using second executions of the point-matching algorithm (89),
- determining (3030) spatial distances (640) between associated pairs of the multiple source points (621, 651, 652, 653, 654, 655) and the backward-match source points (623, 674), and
- establishing (3040) the spatial correspondence between the source imaging dataset (91, 605) and the target imaging dataset (92, 610) at the query point (5905) based on the similarity values of the first executions of the point-matching algorithm (89) and further based on the spatial distances (640).

2. The method of claim 1, the method further comprising:
- determining, for each of multiple further source points positioned relative to the query point (5905), a respective further forward-match target point using third executions of the point-matching algorithm (89),
- determining, for each of the further forward-match target points, respective further backward-match source points using fourth executions of the point-matching algorithm (89),
- determining further spatial distances between associated pairs of the multiple further source points and the further backward-match source points, and
- refining the spatial correspondence based at least on the further spatial distances.

3. The method of claim 2,
wherein the source points are located in a first neighborhood (519) of the query point (5905),
wherein the further source points are located in a second neighborhood (519) of the query point (5905),
wherein the second neighborhood (519) is smaller than the first neighborhood (519).

4. The method of claim 2 or 3,
wherein a first average distance between the source points is smaller than a second average distance between the further source points.

5. The method of any one of claims 2 to 4,
wherein a search area of the point-matching algorithm (89) when determining the multiple further forward-match target points is determined based on the spatial correspondence.

6. The method of any one of claims 2 to 5,
wherein the source points are arranged on a first grid,
wherein the further source points are arranged on a second grid, the second grid having a higher spatial resolution than the first grid.

7. The method of any one of the preceding claims, further comprising:
- determining a ranking of the forward-match target points based on the similarity values of the first executions of the point-matching algorithm (89) and further based on the spatial distances,
wherein the spatial correspondence is determined based on two or more of the forward-match target points selected in accordance with the ranking.

8. The method of claim 7,
- determining weighted similarity values by weighing similarity values based on the associated spatial distances,
wherein the ranking is determined based on the weighted similarity values.

9. The method of any one of the preceding claims,
wherein the descriptors are vectors of pixel-element values of sparse sampling grids arranged relative to the respective point,
wherein the point-matching algorithm (89) calculates vector distances between the vectors of the respective descriptors.

10. The method of any one of the preceding claims,
wherein the descriptors are not embedded in a machine-learned latent space.

11. The method of any one of the preceding claims, further comprising;:
- determining the descriptors of the source points in the source imaging dataset (91, 605) and the descriptors of the target points in the target imaging dataset (92, 610),
wherein said determining of the descriptors consists of collecting intensity values of the respective imaging dataset in a vector.

12. The method of any one of the preceding claims,
wherein the source imaging dataset (91, 605) and the target imaging dataset (92, 610) are of the same imaging modality.

13. A computing device, comprising at least one processing unit and at least one memory, the at least one processing unit being configured to load program code from the at least one memory and to execute the program code, execution of the program code causing the at least one processing unit to:
- obtain a query point (5905) in a source imaging dataset (91, 605),
- determine, for each of multiple source points positioned relative to the query point (5905), a respective forward-match target point using first executions of a point-matching algorithm (89), the source imaging dataset (91, 605) and the target imaging dataset (92,610) both depicting a region of interest of an anatomy of a patient,
the point-matching algorithm (89) determining similarity values between descriptors of source points in the source imaging dataset (91, 605) and descriptors of target points in the target imaging dataset (92, 610),
- determine, for each of the forward-match target points, a respective backward-match source point using second executions of the point-matching algorithm (89),
- determine spatial distances between associated pairs of the multiple source points and the backward-match source points, and
- establish the spatial correspondence between the source imaging dataset (91, 605) and the target imaging dataset (92, 610) at the query point (5905) based on the similarity values of the first executions of the point-matching algorithm (89) and further based on the spatial distances.

14. The computing device of claim 13, wherein execution of the program code causes the at least one processing unit to perform the method of any one of claims 1 to 12.

15. A system, comprising:
- the computing device of claim 13 or 14,
- one or more medical imaging devices configured to acquire the source imaging dataset (91, 605) and the target imaging dataset (92, 610).
